# EUROPÄISCHE PATENTSCHRIFT

(11) **EP 1 141 971 B1**
(45) Veröffentlichungstag und Bekanntmachung des Hinweises auf die Patenterteilung: **29.09.2010**
(21) Anmeldenummer: 99958029.3
(22) Anmeldetag: 12.11.1999
(51) Int. Cl.: G21C 9/008, G21C 13/028, G21C 15/18, G21C 13/02

(54) **KERNKRAFTANLAGE**
NUCLEAR POWER INSTALLATION
REACTEUR NUCLEAIRE

(30) Priorität: 20.11.1998 DE 19853618
(43) Veröffentlichungstag der Anmeldung: 10.10.2001
(73) Patentinhaber: AREVA NP GmbH, 91052 Erlangen (DE)
(72) Erfinder: MESETH, Johann, D-64807 Dieburg (DE)
(74) Vertreter: Tergau & Pohl Patentanwälte
(86) Internationale Anmeldenummer: PCT/EP1999/008730
(87) Internationale Veröffentlichungsnummer: WO 2000/031748

(56) Entgegenhaltungen:
- DE-B- 2 449 451
- FR-A- 1 304 928
- FR-A- 1 485 611
- FR-A- 1 569 485
- US-A- 4 363 780

## Beschreibung

Die Erfindung bezieht sich auf eine Kernkraftanlage mit einem in einem Sicherheitsbehälter angeordneten Reaktordruckbehälter, der von einer Isolierhülle umgeben ist.

In den Druckschriften DE 42 06 660 A1, DE 42 06 658 A1, DE 42 06 661 A1 und DE 36 17 524 C2 sind verschiedene Sicherheitseinrichtungen zur Druckentlastung von Reaktordruckbehältern beschrieben. Diese Einrichtungen sind strömungstechnisch entweder mit dem Innenraum des Reaktordruckbehälters oder mit einer von diesem ausgehenden Druck- oder Ablaßleitung verbunden. FR 1 485 611 offenbart eine Kernkraftanlage gemäß dem Oberbegiff des Anspruchs 1.

Beim Betrieb einer Kernkraftanlage, beispielsweise einer Siedewasserreaktor-Anlage, herrscht im Reaktordruckbehälter etwa eine Temperatur von 280 °C. Der heiße Reaktordruckbehälter gibt an seine Umgebung Wärmeenergie ab, so daß die für die Umwandlung in elektrische Energie nutzbare thermische Energie vermindert wird. Um die thermischen Energieverluste möglichst gering zu halten, ist um den Reaktordruckbehälter eine Isolierhülle vorgesehen, die den Reaktordruckbehälter zur Umgebung hin thermisch isoliert. Die Isolierhülle umgibt dabei insbesondere den oberen Bereich des Reaktordruckbehälters, in dem während des Betriebs die höchsten Temperaturen auftreten. Für eine hohe Wärmeisolierung ist die Isolierhülle zumindest im oberen Teilbereich so weit wie möglich hermetisch, also gasdicht, abgeschlossen. Die Isolierhülle ist vom Reaktordruckbehälter beabstandet, so daß ein Zwischenraum gebildet ist, über den die Außenwand des Reaktordruckbehälters, beispielsweise für Revisionszwecke, zugänglich ist.

Bei modernen Kernkraftanlagen ist eine Anzahl von Sicherheitssystemen vorgesehen, die die Kernkrafranlage bei einem unzulässigen Betriebszustand in den normalen Betriebszustand zurückführen oder die Kernkraftanlage abschalten. Die Bestrebungen gehen dahin, daß diese Sicherheitssysteme passiv ausgeführt sind, d.h. daß zu ihrer Aktivierung keine Fremdenergie notwendig ist. Solche passiven Sicherheitssysteme beruhen beispielsweise auf der Ausnutzung von Gravitationskräften.

Ein Beispiel für eine Kernkraftanlage mit einem passiven Sicherheitssystem ist aus dem Artikel "SWR 1000 - Der Siedewasserreaktor der Zukunft" aus der Zeitschrift "Siemens Power Journal 2/96" der Siemens AG, Best. Nr. A96001-U90-A314, bekannt. Bei diesem Siedewasserreaktor ist eine Einrichtung zur Notkühlung vorgesehen, bei der im Bedarfsfall aus einem Flutbecken allein aufgrund der Gravitationskraft ein Kühlmittel automatisch in den Reaktordruckbehälter zu dessen Kühlung einströmt. Das Kühlmittel ist beispielsweise Wasser.

Zusätzlich zu dieser sogenannten Innenkühlung kann auch eine Einrichtung zur Außenkühlung des Reaktordruckbehälters vorgesehen sein. Bei dieser Außenkühlung wird im Bedarfsfall die Außenwand des Reaktordruckbehälters mit einem Kühlmittel in Kontakt gebracht, so daß Wärme von dem Kühlmittel ausgenommen und der Reaktordruckbehälter abgekühlt wird. Hierzu ist ein Flutraum vorgesehen, der mit dem Kühlmittel gefüllt wird, so daß dann der Reaktordruckbehälter vom Kühlmittel umgeben ist.

Bei Vorhandensein einer Isolierhülle kann dies dazu führen, daß in dem Zwischenraum zwischen Isolierhülle und Reaktordruckbehälter bei einem unzulässigen Betriebszustand eine Druckerhöhung auftritt, die durch Verdampfen des für die Außenkühlung vorgesehenen Kühlmittels hervorgerufen wird.

Der vorliegenden Erfindung liegt die Aufgabe zugrunde, eine Kernkraftanlage anzugeben, bei der ein solch unerwünschter Druckanstieg im Zwischenraum vermieden ist, ohne daß die Isolierwirkung der Isolierhülle beim Normalbetrieb der Kernkraftanlage beeinträchtigt wird.

Diese Aufgabe wird gemäß der Erfindung gelöst durch die Merkmale des Anspruchs 1. Demnach ist u. a. eine Kernkraftanlage mit einem - zumindest teilweise - von einer Isolierhülle umgebenen Reaktordruckbehälter vorgesehen, wobei ein durch die Isolierhülle führender Strömungsweg vorgesehen ist, der bei einem unzulässigen Betriebszustand freigebbar ist und ansonsten verschlossen bleibt.

Der Strömungsweg wird also ausschließlich bei Vorliegen eines unzulässigen Betriebszustands, beispielsweise bei einer unzulässigen Druck- oder Temperaturerhöhung, geöffnet.

Mit Freigabe des Strömungswegs ist vom Zwischenraum zu dem restlichen Innenraum des Sicherheitsbehälters, in dem neben dem Reaktordruckbehälter weitere Einbauten angeordnet sind, eine strömungstechnische Verbindung geschaffen. Über diese Verbindung kann im Bedarfsfall Dampf, der bei der Außenkühlung gebildet wird, aus dem Zwischenraum entweichen, so dass sich der Druck im Zwischenraum dem im restlichen Innenraum des Sicherheitsbehälters angleichen kann. Mit einem derart ausgestalteten Strömungsweg wird erreicht, daß die Isoliereigenschaft der Isolierhülle im normalen Betriebszustand nicht beeinträchtigt ist; zugleich ist im Bedarfsfall bei einem unzulässigen Betriebszustand eine Drucküberhöhung im Zwischenraum vermieden.

In einer besonders vorteilhaften Ausgestaltung ist der Strömungsweg derart ausgebildet, daß er selbsttätig öffnet. Zum Freigeben des Strömungswegs ist also keine besondere Einrichtung zur Ansteuerung notwendig; der Strömungsweg öffnet passiv bei Vorliegen eines Auslösekriteriums. Ein solches Auslösekriterium ist insbesondere das Vorliegen einer ausreichend großen Druckdifferenz zwischen dem Zwischenraum und dem von diesem durch die Isolierhülle getrennten restlichen Innenraum des Sicherheitsbehälters. Ein weiteres Auslösekriterium ist das Absinken der Füllstandshöhe in einem Flutbecken, dessen Kühlmittelvorrat für die Außenkühlung verwendet wird. Das Absinken der Füllstandshöhe auf einen vorgegebenen Wert ist ein sicheres Indiz dafür, daß die Außenkühlung in Gang gesetzt wurde.

Der Strömungsweg ist nach Art eines Siphons ausgebildet und dabei als ein U-förmiger Kanal ausgestaltet. Dieser Kanal ist im normalen Betriebszustand mit einer Flüssigkeit gefüllt, z.B. mit Wasser, so daß der Strömungsweg geschlossen ist. Im Bedarfsfall wird der Strömungsweg auf einfache Weise freigegeben, indem die Flüssigkeit aus dem Kanal abgeleitet wird. Dies wird bevorzugt aufgrund der Druckdifferenz zwischen dem Zwischenraum und dem restlichen Innenraum im Sicherheitsbehälter passiv bewirkt. Alternativ kann auch ein Ventil vorgesehen sein, das im Bedarfsfall öffnet.

In einer zweckdienlichen Ausgestaltung ist am unteren Ende des siphonartigen Kanals eine Ausgleichsleitung angeschlossen, über die der Füllstand im Kanal eingestellt werden kann. Über die Vorgabe des Füllstands kann beispielsweise der Wert des Differenzdrucks zwischen Zwischenraum und restlichem Innenraum eingestellt werden, ab dem der Strömungsweg freigegeben wird. Zudem kann über die Ausgleichsleitung ein durch Verdunstung hervorgerufener Flüssigkeitsverlust im Kanal ausgeglichen werden. Dies ist ein wesentlicher Vorteil, da die Verdunstung der Kanalflüssigkeit unter Umständen zu einem unbeabsichtigten Freigeben des Strömungswegs führen kann.

Die Ausgleichsleitung ist mit einem Flüssigkeitsreservoir verbunden. Dieses Flüssigkeitsreservoir ist ein Flutbecken, das im Sicherheitsbehälter angeordnet ist. Es ist mit einem Kühlmittel, insbesondere Kühlwasser, gefüllt, das zur Kühlung des Reaktordruckbehälters bei einem Störfall vorgesehen ist. Die strömungstechnische Kopplung des Kanals mit dem Flutbecken hat den entscheidenden Vorteil, daß die Füllstandshöhe im Kanal mit der im Flutbecken weitgehend identisch ist, da Flutbecken und Kanal nach Art von kommunizierenden Röhren miteinander verbunden sind. Dies führt zum einen dazu, daß die Füllstandshöhe im Kanal bis auf geringfügige Schwankungen der Füllstandshöhe im Flutbecken über die gesamte Betriebsdauer beim Normalbetrieb konstant bleibt. Ein durch Verdunstung im Kanal hervorgerufener Flüssigkeitsverlust wird daher automatisch ausgeglichen.

Zweckdienlicherweise fällt die Ausgleichsleitung vom Kanal zum Flutbecken hin etwas ab. Dies führt zu einer automatischen Freigabe des Strömungswegs, sobald die Füllstandshöhe im Flutbecken unter die Höhe fällt, auf der der Kanal angeordnet ist. Dieser Fall tritt immer dann ein, wenn die Außenkühlung für den Reaktordruckbehälter aktiviert ist, da hierfür die Kühlflüssigkeit aus dem Flutbecken entnommen wird. Das Freigeben des Strömungswegs ist demnach bei dieser Ausgestaltung unmittelbar mit der Außenflutung des Reaktordruckbehälters gekoppelt. Sie ist also unmittelbar und automatisch mit der Ursache gekoppelt, die den Druckanstieg im Zwischenraum bewirkt. Es ist daher nicht notwendig, den Druckanstieg als ein von der Außenkühlung hervorgerufenes Sekundärkriterium heranzuziehen und durch eine besondere Einrichtung zu messen. Der Strömungsweg ist bereits offen, wenn der Druck im Zwischenraum (z.B. Dampfdruck) zu steigen beginnt.

Zusätzlich zu dem U-förmigen Kanal ist in der Isolierhülle bevorzugt eine Sollbruchstelle vorgesehen, die den Strömungsweg automatisch bei Überschreiten einer vorgegebenen Druckdifferenz freigibt. Hierzu ist als Strömungsweg beispielsweise ein kanalartiger Durchbruch in der Isolierhülle vorgesehen, der im Normalbetrieb mittels einer Berstscheibe verschlossen ist. Alternativ weist die Isolierhülle als solche eine Sollbruchstelle auf, so daß ein Teil der Isolierung bei Überschreiten der vorgegebenen Druckdifferenz herausbricht und dadurch den Strömungsweg bildet.

Zweckdienlicherweise ist der Strömungsweg mit einem Verschlußmechanismus versehen, über den der Strömungsweg im Normalzustand geschlossen gehalten wird. Ein solcher Verschlußmechanismus ist beispielsweise ein Überdruckventil, ein Schieber oder eine Klappe.

Der Verschlußmechanismus ist dabei zweckdienlicherweise ansteuerbar, wobei die Ansteuerung passiv oder auch aktiv (z.B. elektrisch) erfolgen kann. Beispielsweise ist ein Sensor im Zwischenraum vorgesehen, der im Bedarfsfall automatisch ein Signal an das Verschlußelement des Verschlußmechanismus übermittelt und bewirkt, daß dieses den Strömungsweg freigibt. Der Sensor reagiert beispielsweise auf eine unzulässige Druckerhöhung, eine unzulässige Temperaturerhöhung oder auch auf das Vorhandensein von Wasser im Zwischenraum. Die aktive Ansteuerung kann beispielsweise von einer Leitzentrale aus erfolgen.

Für einen möglichst effizienten Druckabbau steht der Strömungsweg mit dem restlichen Innenraum des Sicherheitsbehälters in Verbindung und insbesondere auch mit einem im Sicherheitsbehälter angeordneten Kondensator, so daß zur Druckabsenkung im gesamten Sicherheitsbehälter der im Bedarfsfall durch die (Außen-)Kühlung des Reaktordruckbehälters erzeugte Dampf am Kondensator kondensiert wird.

Ausführungsbeispiele der Erfindung, weitere Details und vorteilhafte Ausgestaltungen werden im folgenden anhand der Figuren näher erläutert. In den Figuren sind gleichwirkende Teile mit denselben Bezugszeichen versehen. Es zeigen jeweils in schematischer und vereinfachter Ansicht:
- FIG 1: einen Sicherheitsbehälter samt Einbauten für eine Siedewasser-Reaktoranlage,
- FIG 2: einen als U-förmigen Kanal ausgebildeten Strö- mungsweg durch eine den Reaktordruckbehälter umgebende Isolierhülle,
- FIG 3: einen durch Berstscheiben verschlossenen Strö- mungsweg,
- FIG 4: einen mit einer Sollbruchstelle verschlossenen Strömungsweg und
- FIG 5: einen durch einen Schieber verschließbaren Strömungsweg.

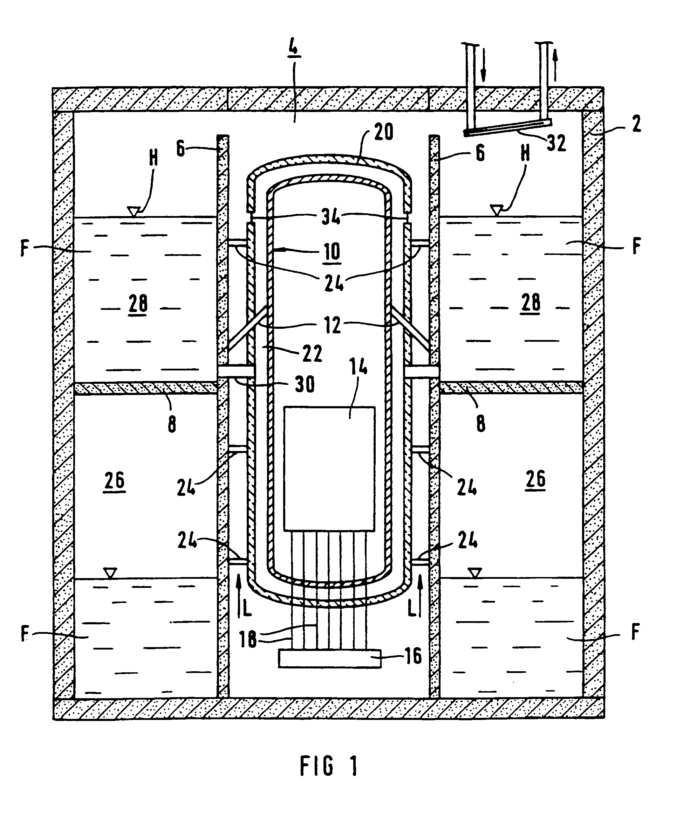

In Figur 1 ist ein fortschrittliches Design für den Sicherheitsbehälter 2 einer Siedewasser-Reaktoranlage skizziert. Dessen Innenraum 4 ist durch die Anordnung eines Innenzylinders 6 und einer Zwischendecke 8 in verschiedene Teilräume unterteilt.

Im vom Innenzylinder 6 umgebenen zentralen Innenbereich des Innenraums 4 ist ein Reaktordruckbehälter 10 angeordnet, der sich über eine Zarge 12 am Innenzylinder 6 abstützt. Der Reaktordruckbehälter 10 weist in seinem unteren Bereich den Reaktorkern 14 auf, in dem nicht näher dargestellte Brennelemente angeordnet sind. Zur Leistungsregulierung werden in den Reaktorkern 14 mittels eines Steuerstabantriebs 16 Steuerstäbe eingefahren. Der Steuerstabantrieb 16 ist am unteren Ende außerhalb des Reaktordruckbehälters 10 angeordnet. Steuerstabführungsrohre 18 reichen vom Steuerstabantrieb 16 durch die Wand des Reaktordruckbehälters 10 hindurch in den Reaktorkern 14.

Der Reaktordruckbehälter 10 ist von einer Isolierhülle 20 vollständig umgeben, die mit einer Anzahl von Abstandshaltern 24 am Innenzylinder 6 befestigt ist. Sie ist mit Ausnahme des Bodenbereichs bevorzugt hermetisch abgeschlossen, also weitgehend gasdicht, und dient zur thermischen Isolation des Reaktordruckbehälters 10. Damit die Wand des Reaktordruckbehälters 10 von außen (beispielsweise für Revisionszwecke) zugänglich ist, ist die Isolierhülle 20 von dem Reaktordruckbehälter unter Bildung eines Zwischenraums 22 beabstandet. Die Temperatur im Zwischenraum 22 liegt beim Betrieb des Reaktors bei etwa 275 °C und damit im Bereich der Betriebstemperatur innerhalb des Reaktordruckbehälters 10. Außerhalb der Isolierhülle 20 beträgt die Temperatur typischerweise lediglich etwa 50 °C. Um diese vergleichsweise geringe Temperatur zu erreichen, ist von unten her ein Kühlluftstrom L zwischen der Isolierhülle 20 und dem Innenzylinder 6 vorgesehen. Die Isolierhülle 20 umgibt den Reaktordruckbehälter 10 in der Regel nicht vollständig, da im Bedarfsfall in dessen unterem Bereich ein für die Außenkühlung erforderliches Kühlmittel ungehindert zuströmen soll. Die Isolierhülle 20 ist daher speziell im oberen Bereich hermetisch abgeschlossen.

Durch den Innenzylinder 6 ist im Innenraum 4 des Sicherheitsbehälters 2 weiterhin ein ringförmiger Außenraum gebildet, der durch die Zwischendecke 8 in einen oberen und einen unteren Außenraum aufgeteilt ist. Der untere ringförmige Außenraum bildet eine Kondensationskammer 26, die teilweise mit einer Kühlflüssigkeit F angefüllt ist.

Der obere Außenraum ist als ein Flutbecken 28 ausgestaltet, welches bis zu einer Füllstandshöhe H ebenfalls mit einer Kühlflüssigkeit F, insbesondere Kühlwasser, angefüllt ist. Im Gegensatz zur Kondensationskammer 26 steht das Flutbecken 28 mit dem restlichen Innenraum 4 des Sicherheitsbehälters in Verbindung, da der Innenzylinder 6 nicht vollständig bis zur Decke des Sicherheitsbehälters 2 reicht. Flutbecken 28 und Kondensationskammer 26 dienen zur Kühlung des Reaktordruckbehälters 10, wenn in diesem oder im Innenraum 4 ein kritischer Druck überschritten wird. Hierzu ist eine Anzahl von nicht näher dargestellten Kühlleitungen und Kühleinrichtungen angeordnet.

Zur Kühlung des Reaktordruckbehälters 10 ist unter anderem eine Außenkühlung oder Außenflutung des Reaktordruckbehälters 10 vorgesehen. Bei der Außenflutung strömt die Kühlflüssigkeit F aus dem Flutbecken 28 in den vom Innenzylinder 6 umschlossenen zentralen Innenbereich des Sicherheitsbehälters 2 ein, so daß die Kühlflüssigkeit F mit der Außenwand des Reaktordruckbehälters 10 in Kontakt kommt. Hierzu weist die Isolierhülle 20 beispielsweise unten, also im Bereich des Steuerstabantriebs 16, Öffnungen auf, durch die die Kühlflüssigkeit F zu dem Reaktordruckbehälter 10 gelangen kann. Zusätzlich kann eine Flutleitung 30 vorgesehen sein, die das Flutbecken 28 direkt mit dem Zwischenraum 22 verbindet.

Bei der Außenflutung wird die Kühlflüssigkeit F durch Kontakt mit dem heißen Reaktordruckbehälter 10 erhitzt. Es entsteht Dampf, der im Zwischenraum 22 zu einer Druckerhöhung führt und der aus dem Zwischenraum 22 zunächst nicht entweichen kann. Der Dampf sammelt sich insbesondere im oberen Bereich an. Um den Druckanstieg möglichst gering zu halten, ist im oberen Bereich, insbesondere im letzten Drittel, der Isolierhülle 20 ein freigebbarer Strömungsweg 34 vorgesehen, der sich bevorzugt ringförmig um die Isolierhülle 20 herum erstreckt. Der Dampf kann bei freigegebenem oder offenem Strömungsweg 34 aus dem Zwischenraum 22 in den restlichen Innenraum 4 entweichen. Von dort gelangt der Dampf zu einem Kondensator 32, der im Bereich der Decke des Sicherheitsbehälters 2 angeordnet ist. Er steht mit der Umgebung außerhalb des Sicherheitsbehälters 2 in Verbindung, um Wärme aus dem Sicherheitsbehälter abführen zu können. Mit Hilfe des Kondensators 32 wird also der Dampf kondensiert und dadurch der Druck im Sicherheitsbehälter 2 abgebaut.

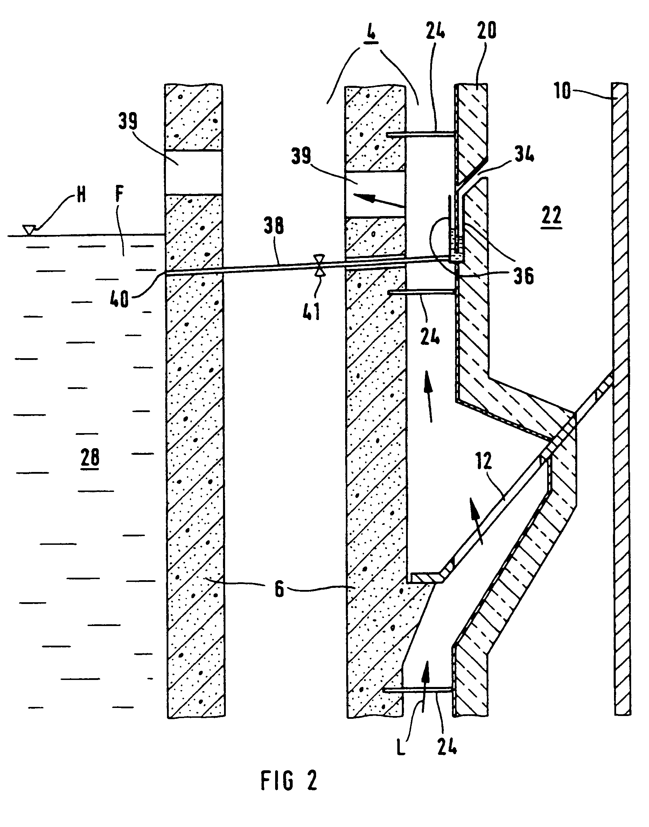

Gemäß Figur 2 ist der Strömungsweg 34 als Aussparung in der Isolierhülle 20 und insbesondere als Kanal 36 ausgebildet. Der Kanal 36 ist hier nach Art eines Siphons U-förmig ausgebildet. Im vorliegenden Ausführungsbeispiel ist der Kanal 36 nach Art eines Topfs, in den von oben ein Trennblech hineinragt, ausgestaltet. Die beiden Schenkel des U-förmigen Kanals 36 verlaufen im wesentlichen parallel zu der Isolierhülle 20. Auch eine mäanderförmige Ausführung kann gewählt werden. Im Kanal 36 befindet sich im Normalbetrieb Wasser.

Vom unteren Ende des Kanals 36 aus verläuft eine Ausgleichsleitung 38 zu dem Flutbecken 28. Sie durchstößt dabei den Innenzylinder 6, der beispielsweise, wie dargestellt, doppelwandig aufgeführt ist. Er enthält Durchlaßöffnungen 39 für den Kühlluftstrom L. Die Ausgleichsleitung 38 ist von der Isolierhülle 20 zum Flutbecken 28 hin gleichmäßig fallend ausgebildet. Sie mündet mit ihrer Öffnung 40 in dieses Flutbecken 28 unterhalb der Füllstandshöhe H. Kanal 36 und Flutbecken 28 sind also nach Art von kommunizierenden Röhren miteinander verbunden, so daß im Kanal 36 und im Flutbecken 28 annähernd gleiche Füllstandshöhen vorherrschen. In den beiden Schenkeln des Kanals 36 liegen jedoch zueinander geringfügig unterschiedliche Füllstandshöhen vor, da im Zwischenraum 22 wegen des Auftriebs des im Zwischenraum 22 gespeicherten heißen Gases ein etwas höherer Druck vorherrscht, als im restlichen Innenraum 4 des Sicherheitsbehälters 2.

In der Ausgleichsleitung 38 kann ein Ventil 41 vorgesehen sein, mit dem die Füllstandshöhe im Kanal 36 von der im Flutbecken 28 entkoppelt werden kann.

Bei Normalbetrieb ist der Strömungsweg 34 also durch eine Wassersperre verschlossen. Im Bedarfsfall, d.h. wenn die Außenkühlung des Reaktordruckbehälters 10 aktiviert wird, sinkt die Füllstandshöhe H im Flutbecken 28, da die Kühlflüssigkeit F aus dem Flutbecken 28 zur Außenkühlung herangezogen wird. Sobald die Füllstandshöhe H unter die Öffnung 40 der Ausgleichsleitung 38 abgesunken ist, läuft der Kanal 36 automatisch leer, so daß der Strömungsweg 34 offen nun ist. Er wird also bereits bei Beginn der Außenkühlung freigegeben. Wasserdampf kann nun aus dem Zwischenraum 22 über den Strömungsweg 34 in den Innenraum 4 strömen. Nach Beendigung der Außenkühlung, wenn das Flutbecken 28 wieder mit Kühlflüssigkeit F gefüllt wird, wird der Strömungsweg 34 automatisch wieder durch Wasser vom Flutbecken 28 verschlossen. Ein Eingreifen von Betriebspersonal ist nicht erforderlich.

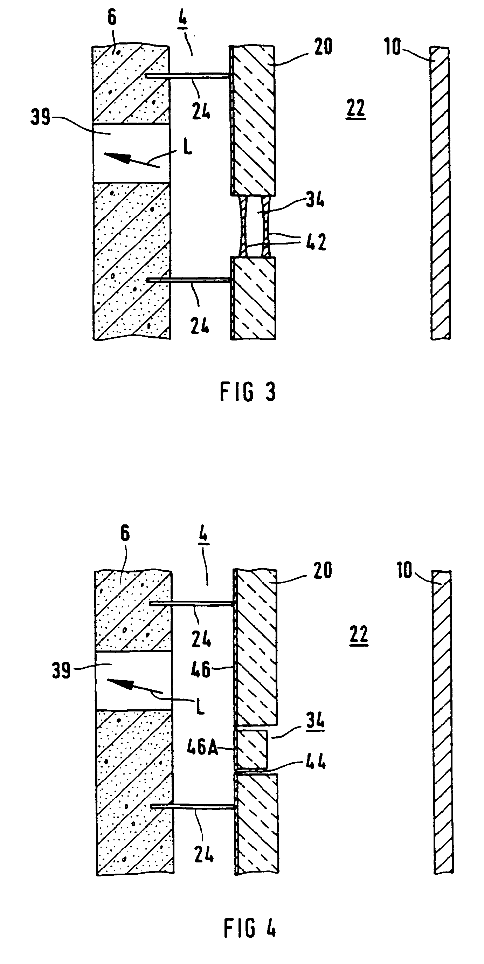

Um eine ausreichend große Strömungsöffnung für den im Zwischenraum 22 entstehenden Dampf vorzusehen, verläuft der U-förmige Kanal 36 um die gesamte Isolierhülle 20 herum, ist also im wesentlichen ringförmig ausgebildet.
Gemäß einer alternativen Ausführungsform des freigebbaren Strömungswegs 34 ist nach Figur 3 in der Isolierhülle 20 eine Aussparung vorgesehen, die mittels einer oder, wie im Ausführungsbeispiel gezeigt, mittels zweier Berstscheiben 42 beim Normalbetrieb verschlossen ist. Bei Vorhandensein von zwei Berstscheiben 42 wirkt der zwischen ihnen eingeschlossene Luftraum als Isolierung. Im Gegensatz zu der Lösung gemäß Figur 2 wird bei dieser Ausführungsform der Strömungsweg 34 erst dann freigegeben, wenn es aufgrund der Außenkühlung in dem Zwischenraum 22 bereits zu einer nennenswerten Druckerhöhung gekommen ist. Aufgrund des Druckunterschieds zwischen dem Zwischenraum 22 und dem restlichen Innenraum 4 wirkt eine Druckdifferenz auf die Berstscheiben 42. Die Berstscheiben 42 sind so ausgelegt, daß sie bei Überschreiten einer vorgegebenen Druckdifferenz brechen und damit den Strömungsweg 34 freigeben. Im Vergleich zu dem U-förmigen Kanal 36 ist hierbei jedoch zu beachten, daß zum Verschließen des Strömungswegs 34 nach Beendigung der Außenkühlung neue Berstscheiben 42 eingesetzt werden müssen. Die Berstscheiben 42 bilden somit einen nicht-reversiblen Verschlußmechanismus.

Einen weiteren, nicht-reversibel arbeitenden Verschlußmechanismus zeigt Figur 4. Hier ist in der Isolierhülle 20 eine Sollbruchstelle 44 vorgesehen ist. Die Isolierhülle 20 weist in der Regel ein äußeres Tragblech 46 auf, an dem zu Isolierzwecken mehrere senkrecht dazu verlaufende lamellenartige Bleche angeordnet sind. Zur Ausbildung der Sollbruchstelle 44 besitzt das Tragblech 46 einen Teilbereich 46A, an dessen Rand das Tragblech 46 ausgedünnt ist, d.h. die Blechstärke dieses Rands ist wesentlich kleiner als die des übrigen Tragblechs 46. Bei Übersteigen einer bestimmten Druckdifferenz zwischen Zwischenraum 22 und Innenraum 4 wird der Teilbereich 46A daher aus der Isolierhülle 20 herausbrechen. Um im normalen Betriebszustand die Isolierwirkung nicht allzusehr zu beeinträchtigen, kann vorgesehen sein, daß an diesem Teilbereich 46A ebenfalls lamellenförmige Bleche vorgesehen sind, die mit den restlichen Blechen jedoch nicht verbunden sein sollten. Auch sollte die Wandstärke der Isolierhülle 20 im Teilbereich 46A nicht zu dick sein, um zu verhindern, daß sich das aus der Isolierhülle herausgebrochene Teil sich verklemmt und somit den Strömungsweg 34 nicht vollständig freigibt.

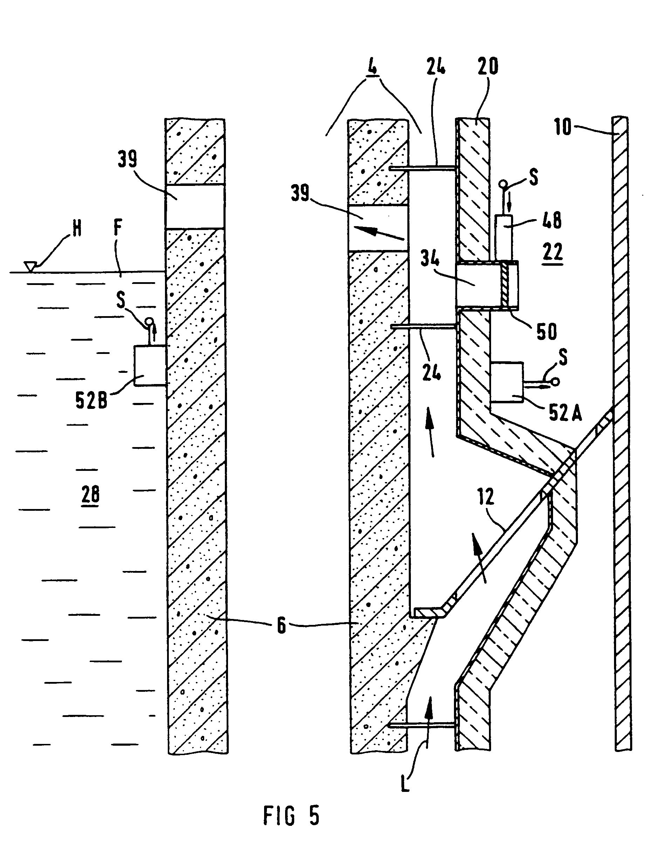

Gemäß Figur 5 ist als Verschlußmechanismus für den Strömungsweg 34 eine Schiebervorrichtung 48 vorgesehen. Die Schiebervorrichtung 48 wird über ein Steuersignal S angesteuert. Statt der Schiebervorrichtung 48 kann auch ein Ventil oder eine Klappe angesteuert werden. Mit der Schiebervorrichtung 48 wird ein Rohrstück 50, das durch die Isolierhülle 22 geführt ist und den Strömungsweg 34 bildet, verschlossen. Anstelle der erwähnten aktiv anzusteuernden Verschlußmechanismen kann in dem Rohrstück 50 auch ein passiv auslösendes Überdruckventil vorgesehen sein. Das Steuersignal S zur Ansteuerung der Schiebervorrichtung 48 wird beispielsweise von einer nicht näher dargestellten Leitzentrale übermittelt. Vorteilhaft ist es, die Schiebervorrichtung 48 unmittelbar mit einem oder mehreren Sensoren 52A, 52B zu verbinden, die im Bedarfsfall ein Steuersignal S erzeugen und an die Schiebervorrichtung 48 übermitteln. Hierbei ist ein aktives Eingreifen von Bedienungspersonal nicht erforderlich. Der dargestellte Sensor 52A ist hierzu beispielsweise im Zwischenraum 22 angeordnet und reagiert auf eine Druck- oder Temperaturänderung. Der weitere Sensor 52B ist alternativ oder zusätzlich im Flutbecken 28 angeordnet und detektiert dort als Indiz für den Beginn der Außenkühlung ein Absinken der Füllstandshöhe H.

Wegen der konstruktiven Ausgestaltung des Verschlußmechanismus gemäß den Figuren 3 und 5 können diese nicht ringförmig um die gesamte Isolierhülle 20 geführt werden. Um einen ausreichend dimensionierten Strömungsweg 34 bereitzustellen, ist daher bevorzugt eine Mehrzahl von Strömungswegen 34 vorgesehen. Der effektive Strömungsquerschnitt des gesamten Strömungswegs 34 richtet sich danach, welche Dampfrate im Bedarfsfall aus dem Zwischenraum 22 abgeleitet werden soll. Der effektive Strömungsquerschnitt beträgt beispielsweise 0,5 m² bis 1,5 m².

## Patentansprüche

1. Kernkraftanlage mit einem Sicherheitsbehälter (2), mit einem im Sicherheitsbehälter (2) angeordneten Reaktordruckbehälter (10), mit einem als Reservoir für eine Kühlflüssigkeit (F) dienenden, im Sicherheitsbehälter (2) angeordneten Flutbecken (28), mit einer der thermischen Isolation des Reaktordruckbehälters (10) dienenden Isolierhülle (20), und mit einem Zwischenraum (22) zwischen dem Reaktordruckbehälter (10) und der Isolierhülle (20), **dadurch gekennzeichnet, daß** die Isolierhülle den Reaktordruckbehälter (10) vollständig umgibt und Öffnungen aufweist, durch die bei einer Außenkühlung des Reaktordruckbehälters (10) die aus dem Flutbecken (28) ausströmende Kühlflüssigkeit (F) zu dem Reaktordruckbehälter (10) gelangen kann, wobei ein durch die Isolierhülle (20) führender Strömungsweg (34) vorgesehen ist, der bei einem unzulässigen Betriebszustand freigebbar ist, so dass bei der Außenkühlung durch Kontakt der Kühlflüssigkeit (F) mit dem heißen Reaktordruckbehälter (10) im Zwischenraum (22) entstehender Dampf über den freigegebenen Strömungsweg (34) aus dem Zwischenraum (22) entweichen kann, und wobei der Strömungsweg (34) als ein U-förmiger Kanal (36) ausgestaltet ist, der im normalen Betriebszustand mit einer Flüssigkeit gefüllt ist.

2. Kernkraftanlage nach Anspruch 1,
bei der der Strömungsweg (34) so ausgebildet ist, dass er selbsttätig öffnet, insbesondere bei Vorliegen einer Druckdifferenz zwischen dem Zwischenraum (22) und dem von diesem durch die Isolierhülle (20) getrennten restlichen Innenraum (4) des Sicherheitsbehälters (2).

3. Kernkraftanlage nach Anspruch 1 oder 2,
bei der am unteren Ende des Kanals (36) eine Ausgleichsleitung (38) angeschlossen ist.

4. Kernkraftanlage nach Anspruch 3,
bei der die Ausgleichsleitung (38) mit einem Flüssigkeitsreservoir, insbesondere mit dem Flutbecken (28), verbunden ist.

5. Kernkraftanlage nach Anspruch 4,
bei der die Ausgleichsleitung (38) vom Kanal (36) zum Flüssigkeitsreservoir (28) fallend ausgebildet ist.

6. Kernkraftanlage nach einem der Ansprüche 3 bis 5,
bei der die Ausgleichsleitung (38) mit einem Ventil (41) versehen ist.

7. Kernkraftanlage nach Anspruch 1 oder 2,
bei der zum Freigeben eines weiteren Strömungswegs (34) eine Sollbruchstelle (44) in der Isolierhülle (20) vorgesehen ist.

8. Kernkraftanlage nach Anspruch 7,
bei der der weitere Strömungsweg (34) mit einem Verschlussmechanismus (42, 44, 48) versehen ist.

9. Kernkraftanlage nach Anspruch 8,
bei der der Verschlussmechanismus (48) mit einem Steuersignal (S) ansteuerbar ist.

10. Kernkraftanlage nach einem der vorhergehenden Ansprüche,
bei der der Strömungsweg (34) mit dem restlichen Innenraum (4) des Sicherheitsbehälters (2) in Verbindung steht, in dem insbesondere ein Kondensator (32) vorgesehen ist.

11. Kernkraftanlage nach einem der vorhergehenden Ansprüche,
bei der der Strömungsweg (34) im oberen Drittel der Isolierhülle (20) vorgesehen ist.

## Claims

1. A nuclear power plant having a containment (2), having a reactor pressure vessel (10) arranged in the containment (2), having a flood tank (28) arranged in the containment (2) and serving as a reservoir for a cooling fluid (F), having an insulating cover (20) serving for thermal insulation of the reactor pressure vessel (10), and having a clearance (22) between the reactor pressure vessel (10) and the insulating cover (20),
**characterized in that** the insulating cover completely surrounds the reactor pressure vessel (10) and includes openings through which, in case of external cooling of the reactor pressure vessel (10), the cooling fluid (F) flowing out from the flood tank (28) can get to the reactor pressure vessel (10),
a flow path (34) leading through the insulating cover (20) being provided, which can be freed in an inadmissible operating state, so that steam developing, in case of external cooling, in the clearance (22) through contact of the cooling fluid (F) with the hot reactor pressure vessel (10) can escape from the clearance (22) through the freed flow path (34), and the flow path (34) being formed as a U-shaped channel (36), which in normal operating state is filled with a liquid.

2. The nuclear power plant according to claim 1,
wherein the flow path (34) is formed in such a manner that it will open automatically, in particular if there is a pressure differential between the clearance (22) and the remaining interior (4) of the containment (2) separated therefrom through the insulating cover (20).

3. The nuclear power plant according to claim 1 or 2,
wherein a compensating conduit (38) is connected to the lower end of the channel (36).

4. The nuclear power plant according to claim 3,
wherein the compensating conduit (38) is connected to a liquid reservoir, in particular to the flood tank (28).

5. The nuclear power plant according to claim 4,
wherein the compensating conduit (38) is formed in a manner descending from the channel (36) to the liquid reservoir (28).

6. The nuclear power plant according to any of claims 3 to 5,
wherein the compensating conduit (38) is provided with a valve.

7. The nuclear power plant according to claim 1 or 2,
wherein, for freeing an additional flow path (34), a predetermined breaking point (44) is provided in the insulating cover (20).

8. The nuclear power plant according to claim 7,
wherein the additional flow path (34) is provided with a closing mechanism (42, 44, 48).

9. The nuclear power plant according to claim 8,
wherein the sealing mechanism (48) can be selected with a control signal (S).

10. The nuclear power plant according to any of the preceding claims,
wherein the flow path (34) is in connection with the remaining interior (4) of the containment (2), in which in particular a capacitor (32) is provided.

11. The nuclear power plant according to any of the preceding claims,
wherein the flow path (34) is provided in the upper third of the insulating cover (20).

## Revendications

1. Centrale nucléaire ayant un confinement (2), ayant une cuve sous pression de réacteur (10) ménagée dans le confinement (2), ayant un réservoir de noyage (28) ménagée dans le confinement (2) et servant de réservoir d'un fluide de refroidissement (F), ayant une gaine d'isolement (20) servant d'isolement thermique de la cuve de réacteur (10) et ayant un espacement (22) entre la cuve de réacteur (10) et la gaine d'isolement (20),
**caractérisée en ce que** la gaine d'isolement enferme la cuve de réacteur (10) complètement et comprend des orifices par lesquelles, en cas de refroidissement externe de la cuve de réacteur (10), le fluide de refroidissement (F) s'écoulant du réservoir de noyage (28) peut parvenir à la cuve de réacteur (10),
un chemin d'écoulement (34) qui passe par la gaine d'isolement (20) étant prévu, qui peut être libéré dans un état opérationnel inadmissible, de façon que, en cas de refroidissement externe, de la vapeur se produisant dans l'espacement (22) par le contact du fluide de refroidissement (F) avec la cuve de réacteur (10) chaude peut échapper de l'espacement (22) par le chemin d'écoulement (34) libéré, et le chemin d'écoulement (34) étant formé comme un canal en U (36), qui, en état opérationnel normal, est rempli d'un liquide.

2. Centrale nucléaire selon la revendication 1,
dans laquelle le chemin d'écoulement (34) est formé de manière qu'il ouvre automatiquement, en particulier s'il y a un différentiel de pression entre l'espacement (22) et l'intérieur (4) restant du confinement (2) séparé de celui-là par la gaine d'isolement (20).

3. Centrale nucléaire selon la revendication 1 ou 2,
dans laquelle une conduite de compensation (38) est raccordée à l'extrémité inférieure du canal (36).

4. Centrale nucléaire selon la revendication 3,
dans laquelle la conduite de compensation (38) est raccordée à un réservoir de liquide, en particulier au réservoir de noyage (28).

5. Centrale nucléaire selon la revendication 4,
dans laquelle la conduite de compensation (38) est formée de manière descendante du canal (36) au réservoir de liquide (28).

6. Centrale nucléaire selon l'une quelconque des revendications 3 à 5,
dans laquelle la conduite de compensation (38) est munie d'une soupape.

7. Centrale nucléaire selon la revendication 1 ou 2,
dans laquelle, pour libérer un chemin d'écoulement (34) additionnel, un point destiné à la rupture (44) est prévu dans la gaine d'isolement (20).

8. Centrale nucléaire selon la revendication 7,
dans laquelle le chemin d'écoulement (34) additionnel est muni d'un mécanisme de fermeture (42, 44, 48).

9. Centrale nucléaire selon la revendication 8,
dans laquelle le mécanisme de fermeture (48) peut être commandé par un signal de commande (S).

10. Centrale nucléaire selon l'une quelconque des revendications précédentes,
dans laquelle le chemin d'écoulement (34) est en liaison avec l'intérieur (4) restant du confinement (2), dans lequel en particulier un condensateur (32) est prévu.

11. Centrale nucléaire selon l'une quelconque des revendications précédentes,
dans laquelle le chemin d'écoulement (34) est prévu dans le tiers supérieur de la gaine d'isolement (20).
